Europäisches Patentamt

European Patent Office

Office européen des brevets

(11) Publication number: **0 272 893**
A2

# EUROPEAN PATENT APPLICATION

(21) Application number: **87311189.2**

(22) Date of filing: **18.12.87**

(51) Int. Cl.⁴: **H 04 N 3/16**
**H 04 N 5/44**

(30) Priority: **22.12.86 GB 8630556**

(43) Date of publication of application:
**29.06.88 Bulletin 88/26**

(84) Designated Contracting States:
**AT BE CH DE ES FR GB GR IT LI LU NL SE**

(71) Applicant: **THORN EMI plc**
**4 Tenterden Street**
**London W1R 9AH (GB)**

(72) Inventor: **Plumbley, Mark David**
**"High Dewe"**
**Alverstone Isle of Wight PO36 0EY (GB)**

(74) Representative: **Marsh, Robin Geoffrey et al**
**Thorn EMI Patents Limited The Quadrangle Westmount**
**Centre Uxbridge Road**
**Hayes Middlesex, UB4 0HB (GB)**

(54) Cathode ray tube displays.

(57) Display apparatus which includes a cathode ray tube. Electrical signals carrying information indicative of visual images are conveyed to an electrode in the tube and an electron beam is modulated in response to the signal and scans the screen in line and field directions to generate visual images. The line scan causes the beam to move alternately in the forward sweep (display) and flyback directions and the apparatus is arranged to cause the ratio of blanking period to display period to be greater than conventional values, i.e. at least 23.08%. Increasing blanking time and hence available flyback time over conventional values allows display improvement techniques, such as increasing field rate or number of lines per field, to be used without requiring, for example, line output transistors with higher voltage ratings.

```
            1            2            3            4
INCOMING  ┌─────┐    ┌──────┐    ┌─────┐    ┌─────┐
 VIDEO    │ ADC │────│ LINE │────│ DAC │────│ CRT │
 ──────▶  └─────┘    │STORE │    └─────┘    └─────┘
                     └──────┘
```

FIG.1

EP 0 272 893 A2

Description

"CATHODE RAY TUBE DISPLAYS

The present invention relates to cathode ray tube displays and particularly, but not solely, to television receivers.

Conventional television receivers, which are for use in the U.K. and are in accordance with the PAL-I technical specification, scan 50 fields per second, with 312.5 lines per field and have a line time of 64μs, of which 52μs is used for displaying information on the CRT screen, and the remaining 12μs is blanking time, i.e. ratio of blanking time to display time of approximately 23.08%. The blanking time is a period when the brightness of the electron beam is zero and flyback is arranged to take place within the blanking time.

Many display improvement techniques, such as flicker reduction by increasing the field rate or by increasing the number of lines per field, involve an increase in the line frequency. This decreases the time available for flyback, requiring an increase in the collector-emitter voltage across the line output transistor during flyback so that more expensive, higher voltage line output transistors (and other components) have to be used.

An object of this invention is to provide display improvements without causing such cost increases.

According to the invention there is provided display apparatus including a cathode ray tube, means for conveying, to a control electrode of said tube, electrical signals bearing information indicative of visual images to be displayed on the screen thereof; the apparatus including line and field scanning means for causing an electron beam, generated within said tube and modulated in response to said signals, to scan in line and field directions respectively over said screen to generate said visual images, each line period consisting of a display period and a blanking period and the line scanning means causing the beam to execute alternately forward sweep and flyback motions, the flyback period being included in the blanking period; and the apparatus including means to cause the ratio of blanking period to display period to be at least 23.08%.

In the present invention, arranging the blanking time to be greater than the conventional value allows the flyback time to be greater than conventional values which enables display-improvement techniques to be utilised without necessitating transistors with higher voltage ratings.

In the invention, the ratio of the blanking (and hence flyback) period to the display period associated with each line is made to be greater than that associated with conventional equipment. This may be done in any appropriate way, for example, by appropriate arrangement of the format of the signal as transmitted (whether broadcast or sent via a cable network), or by providing appropriate processing at a television eceiver. Such processing may involve compression of the line display period; if the video format is such that conventional processing in the television receiver requires expansion of the line period (i.e. the video signal is transmitted in time-compressed form) then the line display period may be expanded to a lesser degree than conventionally, allowing more blanking time.

The present invention is applicable to cathode ray tube displays, for example, monitors or television receivers, and may be embodied in any television standard.

In order that the invention may more readily be understood, a description is now given, by way of example only, reference being made to the accompanying drawings, in which:-

Figure 1 is a block diagram of a monochrome television receiver embodying the present invention,

Figure 2 is a block diagram of another form of television receiver embodying the present invention.

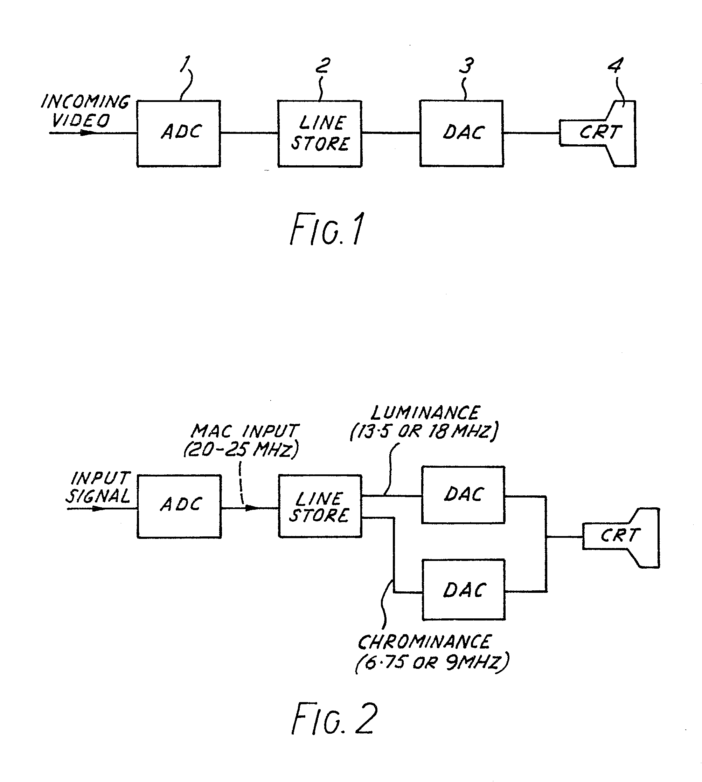

In a monochrome television receiver as shown in Figure 1, the incoming line is digitalised at an analogue-to-digital converter 1 at a clock frequency of f1, and fed into a line store 2. It is then read out from the line store 2 at a frequency of f2, which in this case is f1x9/8 (the timings given are to the nearest s). This signal can then be displayed having a longer blanking and hence flyback time than conventionally. The signal is passed through a digital-to-analogue converter 3 for display at cathode ray tube 4.

The display time has been reduced by 11%, while the blanking time has been increased by 50% from 12μs to 18μs. This corresponds to a ratio of blanking time to display time of approximately 39% as opposed to about 23.08% as in conventional apparatus. If the number of displayed lines is now doubled, the blanking period will be 9μs, instead of 6μs which it would be in the absence of the compression.

For colour signals, the same principle can be applied, using more line stores to process the Red, Green and Blue components, or Lumiance and Chrominance components of the signal.

The present invention is readily applicable to television receivers for use in association with the MAC television standard.

The MAC ("Multiplexed Analogue Components") television system for European DBS ("Direct Broadcast Satellite") uses time compression to time-multiplex the luminance and chrominance components of the video signal into one line time, and the video signal is transmitted in this compressed form. The luminance part of the signal is compressed by 3:2 with the chrominance component compressed by 3:1. A line store is required in any receiver capable of decoding a MAC signal, because of this time compression; and the video signal is transmittd in this compressed form. Accordingly, the time expansion is achieved in the receiver by writing the video as received into the line store at a first clock rate and reading out at a lower clock rate. Thus the display part of the line can readily be compressed into a smaller portion of the total line time, in order to make use of the present invention, by providing a different clock-out rate.

The standard MAC system is defined with an aspect ratio of 4:3 (width:height) of the transmitted picture. An alternative system has been proposed whereby a 16:9 (5.33:3) picture is "squeezed" into the same time slot, by compressing it more horizontally. Each receiver would have to be capable of displaying both the normal 4:3 and the wide 16:9 picture.

If a 16:9 receiver were to display the 16:9 transmitted signal, with a normal blanking time, the decompression ratios required would be 3:2 and 3:1 for the luminance and chrominance respectively. For example, if an input clock of 20.25 MHz was used for the input, 13.5 MHz would be used for the luminance, with 6.75 MHz for the chrominance.

For the same receiver to display the 4:3 picture (without altering the scanning of the display), the readout frequencies have to be increased so that the entire input is read out over the centre 3/4 of the 16:9 display. This requires the readout frequences to be increased by a factor of 4/3. This leads to decompression ratios of 9:8 and 9:4, or output frequencies of 18 MHz and 9 MHz. If all the frequencies required to display both 16:9 and 4:3 picutures are to be divided down from a single clock, it would have to be the lowest Common Denominator of all of them - which is 324 MHz. An alternative solution to this high clock frequency is the use of two clock generators, each independently phase locked, which is still more expensive than a single basic clock. A simple block diagram of this type of receiver is shown in Figure 2.

If line compression is used to compress the line by a factor of 9:8, the decompression ratios are much more convenient. The 3:2 and 3:1 ratios become 4:3 and 8:3, while the 9:8 and 9:4 decompression ratios become 1:1 and 2:1. The basic clock which can be used to generate all of the required frequencies is now only 60.75 MHz (i.e. 3 × 20.25). This does not require a change to the overall architecture of the MAC receiver, merely a change to the clock frequencies used to read out the signal from the line store. An additional line store is not required, since a normal MAC receiver would require one anyway.

In this particular case, compressing the active part of the line into a smaller portion of the total line time has two advanages: the clock generation is simplified; and the available flyback period is increased.

A well-known display improvement technique is the use of field or frame stores to increase the field rate of the display. For a normal dispaly, the field rate is 50 Hz, since this is the field rate of the transmitted signal. Using field stores, this can be doubled to 100 Hz.

Since the line frequency is now twice that of a normal receiver, the blanking time (or time available for the flyback to occur) is halved. Line compression is used to reduce the display portion of the line time, thus increasing the time for blanking and hence flyback. This is done with an extra line store between the field store and the DAC. Alternatively, the field store output frequency, f2, is increased slightly to read the samples from the field store slightly faster than normal.

For a HDTV receiver with 1250 lines, and 100 fields per second (2:1 interlaced), the line frequency is 64 kHz. Without lien compression, the flyback time is only 3μs, which requires high voltage rating transistors. With line compression, this flyback time would easily be doubled to 6μs, thereby obviating such high-voltage transistors.

**Claims**

1. Display apparatus including a cathode ray tube, means for conveying, to a control electrode of said tube, electrical signals bearing information indicative of visual images to be displayed on the screen thereof; the apparatus including line and field scanning means for causing an electron beam, generated within said tube and modulated in response to said signals, to scan in line and field directions respectively over said screen to generate said visual images, each line period consisting of a display period and a blanking period and the line scanning means causing the beam to execute alternately forward sweep and flyback motions, the flyback period being included in the blanking period; and the apparatus including means to cause the ratio of blanking period to display period to be at least 23.08%.

2. Display apparatus according to Claim 1 further characterized in that the means to cause the ratio to be at least 23.08% includes means for feeding a line signal to a line store at a first frequency f1, means for reading it out at a second frequency f2, said second frequency being higher than said first frequency, and means for feeding the read out signal to the cathode ray tube.

3. Display apparatus according to Claim 2 further characterised in that said second frequency f2 = f1 × 9/8.

4. Display apparatus according to any one of the preceding claims configured to operate as a television receiver.

5. Display apparatus according to any one of Claims 1 to 3 configured to operate as a monitor.

INCOMING VIDEO → ADC (1) — LINE STORE (2) — DAC (3) — CRT (4)

FIG.1

INPUT SIGNAL → ADC — MAC INPUT (20-25 MHZ) → LINE STORE — LUMINANCE (13·5 OR 18 MHZ) → DAC → CRT; CHROMINANCE (6·75 OR 9MHZ) → DAC

FIG. 2